(19) Europäisches Patentamt
European Patent Office
Office européen des brevets

(11) **EP 1 658 681 B1**

(12) **EUROPEAN PATENT SPECIFICATION**

(45) Date of publication and mention
of the grant of the patent:
**13.06.2007 Bulletin 2007/24**

(51) Int Cl.:
***H04B 5/00*** *(2006.01)*    ***G01S 11/06*** *(2006.01)*

(21) Application number: **04768125.9**

(22) Date of filing: **19.08.2004**

(86) International application number:
**PCT/GB2004/003566**

(87) International publication number:
**WO 2005/020449 (03.03.2005 Gazette 2005/09)**

(54) **PROXIMITY DETECTING APPARATUS**

NÄHERUNGSDETEKTIONSGERÄT

APPAREIL DE DETECTION DE PROXIMITE

(84) Designated Contracting States:
**AT BE BG CH CY CZ DE DK EE ES FI FR GB GR HU IE IT LI LU MC NL PL PT RO SE SI SK TR**

(30) Priority: **19.08.2003 GB 0319518**

(43) Date of publication of application:
**24.05.2006 Bulletin 2006/21**

(73) Proprietor: **Plextek Limited**
**Great Chesterford,**
**Essex CB10 1NY (GB)**

(72) Inventors:
• **RICHARDS, Tony,**
**Plextex Limited**
**Great Chesterford,**
**Essex CB10 1NY (GB)**

• **FITZ, Steve**
**Chelmsford,**
**Essex CM2 7QT (GB)**

(74) Representative: **McCann, Heather Alison et al**
**Electronic Intellectual Property,**
**Fairfax House**
**15 Fulwood Place**
**London WC1V 6HU (GB)**

(56) References cited:
**DE-C- 3 719 179      GB-A- 1 257 692**
**GB-A- 2 311 190      GB-A- 2 335 323**
**US-A- 6 134 420      US-A1- 2002 140 419**

## Description

### Field of the Invention

The present invention relates to proximity detecting apparatus and is concerned particularly with radio frequency proximity detecting apparatus that operate in the low radio frequency range. The present invention also relates to radio frequency transmitter and radio frequency receiver designs generally.

### Background of the Invention

Identifying the relative or absolute location of an object has always been of interest, and historically it has been an almost essential part of survival. As a result, development of technical means for identifying location has always had momentum. More recently location based services (which deliver content based on a location) have become increasingly popular, so that location is now used in leisure applications as well as the traditional applications of security and survival.

There is a myriad of methods for identifying the location of an object and corresponding means for performing those methods, and these can be broadly categorised according to range (distance to the object that you are trying to locate); whether or not bearing is required (actual location of the object relative to your location or relative to magnetic north); and accuracy required. In general, location detection systems are adapted to identify the location of objects located some distance away (in the context of security and survival, one would want to locate an enemy when the enemy is far away, rather than when he is close), which means that high frequency signals, which can propagate over significant distances, are preferably used. For example, mobile communication systems (including location finding) together with GPS (global positioning satellite) operate in the Ultra High Frequency (UHF) range. Although high frequency signals facilitate excellent temporal resolution of signals, they are subject to reflection from objects having a characteristic length greater than their wavelength, and to absorption by human bodies and trees and the like. In addition, received signals can destructively interfere at the receiver, causing a problem known as fading. As a result a transmitted signal can arrive at the receiver having been reflected off one or more objects (this is known as multi-path propagation), or not at all. Thus the indicated direction can be completely erroneous or non existent.

Whilst these problems can be reduced by employing several or more receivers, this increases the complexity and cost. Essentially, therefore, in order to provide accurate measurements of location at reasonable cost, high frequency systems require a clear line-of-sight between the antennas of the transmitter and receiver, which is difficult to achieve for most ground-based location determining systems.

In addition to the GPS method mentioned above, examples of known location monitoring methods include "angle of arrival", "time of arrival", and "received signal strength indicator" (RSSI). With the "angle of arrival" method, a receiver scans an area in order to identify location, in terms of an angle relative to the receiver, of a signal emitted by a transmitter. Angle of arrival methods typically utilize high frequencies, so as to avoid interference problems associated with low frequency signals, and thus suffer from the multi-path and obstruction problems described above; such a method is described in international patent application PCT/GB90/00077, publication number WO90/08060. The second method, "time of arrival", involves two or more receivers arranged to evaluate the time of arrival of a pulse emanating from a transmitter, from which the distance of the transmitter, relative to the two receivers, can be identified. In order to measure time accurately, the resolution of the pulse has to be fine, which means that such systems use high frequencies, and are subject to the reflection and absorption problems described above, so that the time of arrival can be the "time of arrival after experiencing several reflections" and thus highly inaccurate. The third method, "received signal strength indicator" (RSSI), evaluates the strength of the signal received, and, applying Maxwell's equation relating signal strength to distance, evaluates a distance relating thereto. Since this method is wholly dependent on signal strength, it is particularly sensitive to fading (where the signals received destructively interfere with one another) and can, on occasion, yield no signal strength whatsoever. Applications utilizing RSSI to identify location are described in United States patent US 5,714,932 and United States patent US 5,218,344.

US patent application US2002/140419 describes a system for measuring small changes in distance. The system comprises a fixed unit and a mobile unit, the mobile unit being a passive transponder that reflects signals broadcast by the fixed unit. The distance between the fixed and mobile units is determined by the variation of mutual coupling between the coil in the mobile unit and the coil in the fixed unit: the fixed unit broadcasts a field that is picked up by the mobile unit coil, generating a voltage in that coil that, in turn, creates a current in the coil. This current creates an opposing magnetic field that is "sensed" by the fixed unit coil with the result that its impedance changes and this impedance change is measured by the fixed unit's bridge detector circuit. The range of the system is dependent on mutual coupling between the coils and the sensitivity of the circuit to detect changes to this coupling. The further they are separated, the weaker the coupling and there will come a point where a change in distance will make a change in output voltage that is comparable with the noise level of the circuit. As described in paragraphs 1 and 9 of the application, the system can only work over very short distances, of the order few cm.

Summary of the Invention

According to a first aspect of the present invention there is provided a radio frequency receiver for use in a proximity detecting system, the radio frequency receiver comprising
at least one antenna coil operable to receive radio frequency signals;
tunable receiver circuitry arranged in operative association with the antenna coil and being arranged to modify the frequency at which radio signals are received by the radio frequency receiver,
a signal processor arranged to amplify and filter signals received by the radio frequency receiver;
a processing system arranged to receive radio signals amplified and
filtered by the signal processor so as to evaluate a signal strength associated with each said antenna coil, the processing system being arranged to evaluate a distance between a radio frequency transmitter and the radio frequency receiver on the basis of evaluated signal strengths associated with radio signals received by at least one antenna coil, wherein the radio frequency receiver is operable to receive and process radio signals of frequencies between 100kHz and 10MHz.
An advantage of operating in this low frequency range is that multi-path problems associated with high frequency systems, such as reflections from objects located between the path of the transmitter and receiver, are significantly reduced. A further advantage is that emissions from a low frequency transmitter remain as a near field transmission for distances of tens or even hundreds of metres from the transmitter (the extent of the near field depending on operating frequency). When operating within the near field of a transmitter, signal strength is proportional to the inverse cube of distance from it, allowing its range to be identified extremely accurately. In some circumstances (i.e. for some operating frequencies), this distance can be identified to within $\pm 10$ mm. Within the 100 kHz - 10 MHz range of operation, radio signals from loop antennas emanate primarily as a magnetic field, which, being a vector, has a direction in addition to a magnitude. The direction of the magnetic field varies in a non-uniform way, which means that, in order to measure the magnitude of the signal strength at any given location, the magnetic field should be sensed in a plurality of orthogonal directions. When the coil comprises a circular loop, the magnitude of the magnetic field emanating therefrom assumes a prolate spheroid-like shape, and, for such a shaped antenna, the radio receiver preferably includes three coils. The tunable receiver circuitry is then selectively arranged to cooperate with each said antenna coil.
Advantageously, in a first operating condition, the receiver circuitry is arranged to select each of the three antenna coils in accordance with a specified selection procedure, which, for example, could involve sequential selection of each antenna coil. The tunable receiver circuitry is arranged to cooperate with a selected coil, and the signal processing means is arranged to amplify and filter signals received from the selected coil. Preferably the radio frequency receiver includes a processing system, which can evaluate a signal strength associated with signals received from each of the coils and combine the evaluated signal strength so as to evaluate a range between the transmitter and receiver. Preferably the receiver circuitry is arranged to operate in a second operating condition wherein none of the antenna coils is selected and the signal processor is arranged to amplify and filter radio signals in the second operating condition; the filtered and amplified signals corresponding to the second operating condition can then be used to modify the signal strengths evaluated in the first operating condition.
Alternatively the radio frequency receiver could comprise three receivers, each oriented along an axis orthogonal to that occupied by another receiver; this would then enable simultaneous measurements of magnitude of field strength along each axis.
Preferably the radio frequency receiver is operable to selectively receive signals at a plurality of different frequencies. An advantage of having a variable frequency transmitter is that it provides a means of avoiding interference from man made noise, since such noise typically varies with time, frequency and location. Identification of a frequency selective sequence could be identified by the processing system arranged to evaluate correlation between processed signals.
Alternatively or additionally the radio frequency receiver is operable to identify a modulation pattern within a transmitted radio signal and compare the identified pattern with one or more predetermined modulation patterns. An advantage of configuring a proximity detecting equipment such that transmitted and received signals cooperate by means of a modulation signal is that the receiver can distinguish between valid transmissions and interfering signals such as man made noise.
Preferably a radio frequency receiver according to embodiments of the invention cooperates with a radio frequency transmitter operable to transmit radio signals of frequencies less than 10MHz, the transmitter comprising an antenna circuit having a variable impedance and a frequency bandwidth associated therewith, the frequency bandwidth defining a frequency band within which the radio frequency transmitter is operable to transmit: signals, wherein the antenna circuit is operable to modify the impedance so as to modify the magnitude of said frequency bandwidth, and to transmit a radio frequency signal having a frequency within said modified frequency bandwidth.
Preferably the antenna circuit comprises a coil having a plurality of windings and tapping means for connection to said windings. The tapping means is arranged to vary the loss associated with the antenna circuit by connection to a set of the plurality of windings, thereby removing energy from the coil and reducing the Q factor of the coil. By reducing the Q factor of the antenna circuit the bandwidth thereof is increased, and this then enables the antenna circuit to transmit at the various frequencies.

Conveniently the apparatus includes a direct current power supply, and said set of said windings is connectable to the power supply via a return path. Thus the energy that is removed from the coil is returned to the power supply via the return path. The antenna circuit can include a capacitor arranged in parallel with said power supply, so that the return path is connectable to said capacitor. Preferably the return path includes a current direction controlling device such as a diode.

Known methods of reducing the Q factor of tuned circuits include introducing a load resistor into the antenna circuit; arrangements of this second aspect of the invention are an improvement over such known methods since energy is not lost, but is instead fed back to the power supply.

Further features and advantages of the various aspects of the invention will become apparent from the following description of preferred embodiments of the invention, given by way of example only, which is made with reference to the accompanying drawings.

Brief Description of the Drawings

Figure 1 is a schematic diagram showing a situation in which proximity detecting apparatus comprising a radio frequency (RF) transmitter and a radio frequency (RF) receiver according to the invention can be used;
Figure 2 is a schematic diagram showing components of the RF transmitter of Figure 1;
Figure 3 is a circuit diagram showing, in more detail, components of the RF transmitter of Figure 1 according to a first arrangement;
Figure 4 is a circuit diagram showing further details of the RF transmitter of Figure 1 according to the first arrangement;
Figure 5 is a schematic circuit diagram showing a conventional lossy antenna circuit;
Figure 6 is a schematic circuit diagram showing the components of the RF transmitter of Figure 1 according to a second arrangement;
Figure 7 is a schematic diagram showing components of the RF receiver of Figure 1;
Figure 8 is a flow diagram showing steps performed by the RF receiver of Figure 1 when identifying the range between the child and guardian shown in Figure 1; and
Figure 9 is a flow diagram showing further steps performed by the RF receiver of Figure 1.

Detailed Description of the Invention

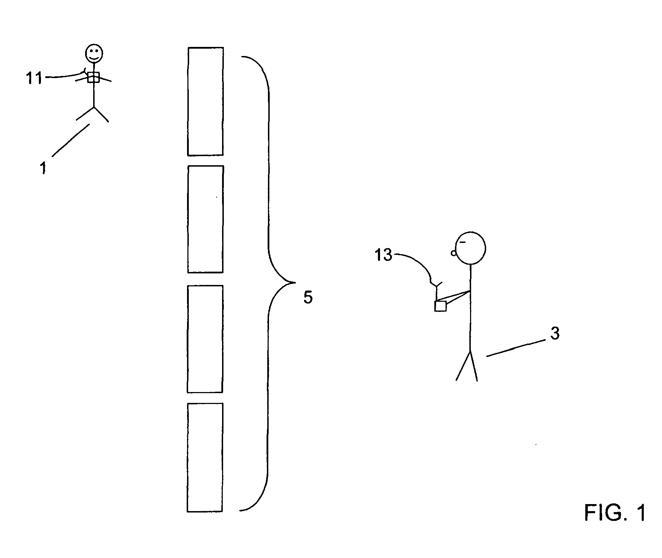

Embodiments of proximity detecting apparatus according to the invention will now be described for an example scenario in which the degree of proximity between a child and a guardian is monitored by equipment associated with the guardian. Referring to Figure 1, the child 1 and guardian 3 are located in a crowded area comprising obstacles, several doorways and passageways (shown collectively as part 5 in Figure 1). The child 1 is equipped with a radio frequency (RF) transmitter 11 and the guardian is holding a radio frequency (RF) receiver 13. The components and operation of the RF transmitter and RF receiver 11, 13 will be described in detail below, but in overview, the RF transmitter 11 transmits low frequency signals either constantly or in response to an external input. The signals so transmitted are received by the RF receiver 13, which comprises one or more antenna coils and measures the output from each coil, then amplifies, mixes to an intermediate frequency for filtering and determines the amplitude of the signal corresponding to each coil. Once the signals from each coil have been processed the magnitude of the magnetic field is computed therefrom, thereby providing a means of identifying a range between the RF transmitter 11 of the child 1 and the RF receiver 13 of the guardian 3.

As stated above, embodiments of the invention operate in the low frequency RF range, that is to say less than 10 MHz, and preferably within the following bands:

- 9-148.5kHz

- 240-315kHz

- 3.155-3.4MHz

- 6.765-6.795MHz

- 7.4-8.8MHz

As is known in the art, the advantage of operating in the low frequency RF range is that, rather than being reflected by obstacles and the like, the radio waves propagate through such obstructions. This means that, whereas high RF signals arriving at the receiver 13 are likely to have arrived via several paths (commonly referred to as multi-path problems), the low radio frequency signals received by the RF receiver 13 are far more likely to have traveled directly from the RF transmitter 11. Thus multi-path problems that are experienced at high frequencies are significantly reduced.

As is also well known, emissions from low frequency devices remain in the near field for much greater distances from their source than do emissions from high frequency devices. For example, low frequency emissions at 1MHz remain in the near field for distances up to approximately 50m from the source whereas at UHF, emissions at 400MHz remain in the near field only for distances up to 12cm. In the near field, Maxwell's equations indicate that signal strength is proportional to the inverse cube of distance from the transmitter, which bounds the effective area of operation. Since signal strength is proportional to the inverse cube of distance from the transmitter, a small change in distance yields a large change in signal strength, which means that range can be identified far more accurately than is possible using higher frequency devices over useful (i.e. 0 - 10m) distances.

In this example scenario, where a guardian 3 is tracking the nearness of a child 1 in a crowded area (e.g. a shopping precinct), there is likely to be a significant amount of background noise and interference, which is transmitted from electronic equipment such as monitors, terminals and the like, and is in the low frequency range. Thus although low frequency signals take a more direct route between transmitter and receiver than that which would be taken by high frequency signals, a receiver operating at low frequencies is likely to receive a farrago of background noise and interference in addition to any signals emanating from a transmitter. This makes it difficult for the receiver to know whether it has received a wanted transmission or noise or interference.

One solution to this problem, as presented in embodiments of the invention, is to transmit data signals at a plurality of low frequencies in accordance with a predetermined frequency hopping pattern. In order to process such signals the RF receiver 13 is then configured to identify a frequency hopping pattern and to lock into the identified pattern (described in detail below). Once a frequency hopping pattern has been identified, signals received by the RF receiver 13 at the identified frequencies in the pattern can, with some degree of certainty, be considered to contain signals transmitted by the RF transmitter 11.

Another solution to this problem is to transmit signals at a high power and set an upper amplitude threshold in the receiver, which acts to filter out certain low-power and typically noise related signals; yet another solution is to characterize the environment within which the proximity detecting apparatus is to be used and to avoid frequencies that are known to contain noise. This latter solution is likely to be well suited to well defined environments such as a building site or a dock yard, but not so well suited to environments such as shopping malls, the railway network and the like where the occupants and devices associated therewith change over time and distance.

Yet another possibility involves adding a modulation pattern on a transmitted signal and preconfiguring the receiver to recognise the modulation pattern. The modulation pattern can include a digitally modulated sequence of symbols such as a 1-0-1-0 repeating sequence or alternately be a sequence of symbols that forms a unique data word. When signals are received, amplified and filtered, the output is examined for the presence of a modulation pattern, and, if such a pattern is found, it is then compared with the preconfigured patterns. This method could be used in addition, or as an alternative, to the frequency hopping solution, so as to provide a means of validating a transmission.

In the embodiments described below the radio frequency transmitter and radio frequency receiver are both adapted to utilise frequency hopping but the skilled person will appreciated from the foregoing that this is a preferred, and not essential, aspect of the invention.

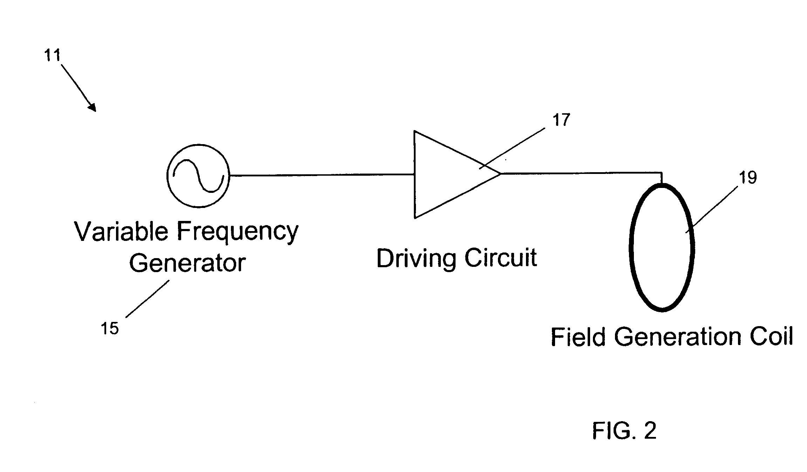

The RF receiver 13 will be described in detail later, but firstly aspects of a preferred design of the RF transmitter 11 will be described, with reference to Figure 2. This design is "preferred" because it provides a convenient way of enabling signals to be transmitted over a range of different frequencies, and is thus particularly well suited to the frequency hopping aspect of the invention.

The transmitter 11 comprises a variable frequency generator 15, a driver circuit 17 and a field generation coil 19, the latter of which acts as an antenna for the RF transmitter 11. The variable frequency generator 15 can be provided by a direct digital synthesizer (DDS), which is a commercial off the shelf (COTS) programmable device configured to output a specified waveform (e.g. sine, square or triangular wave) at specified frequencies. The driver circuit 17 is arranged to create an alternating current of sufficient magnitude that a sufficiently high magnetic field is produced and transmitted via the coil 19.

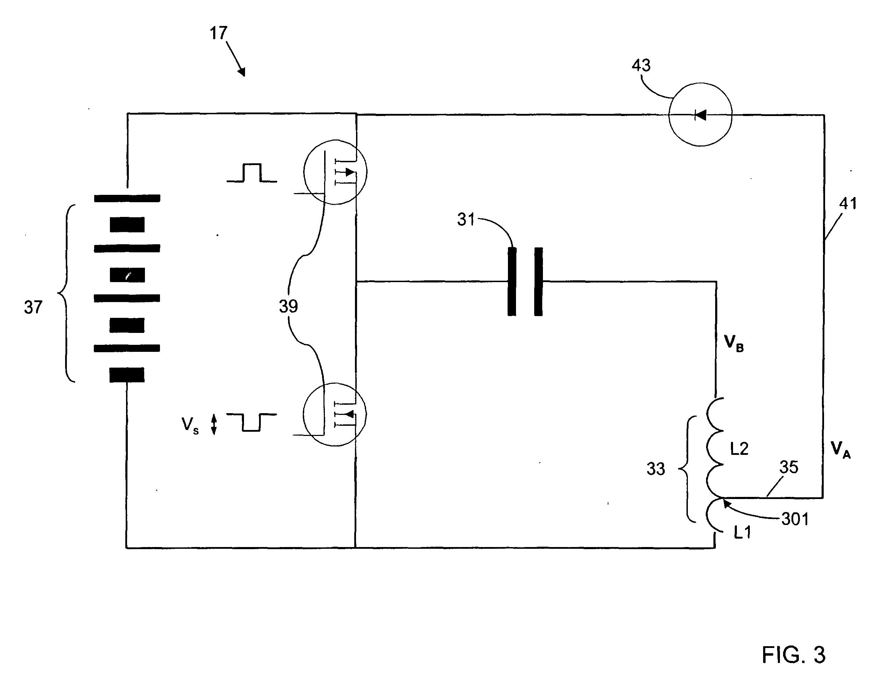

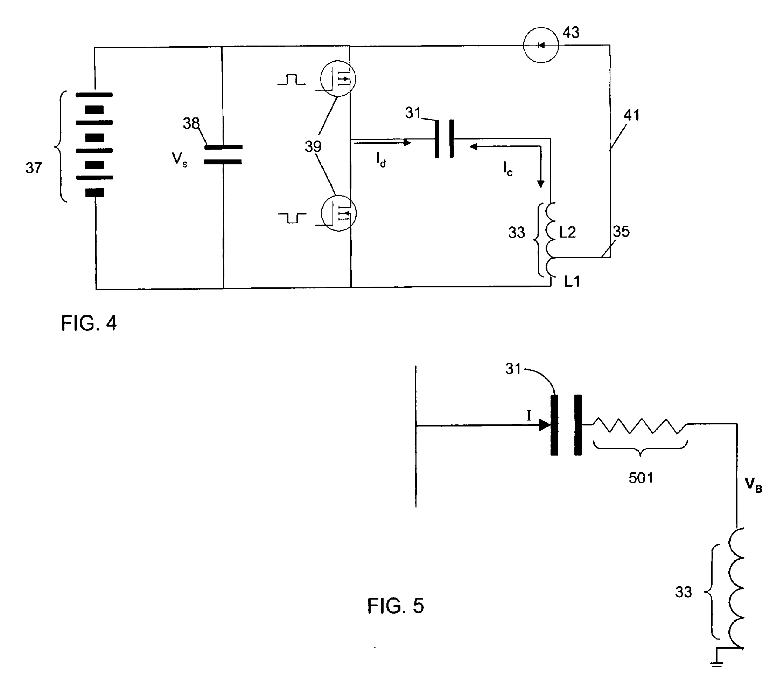

Referring now to Figure 3, in a first arrangement, the driver circuit 17, hereinafter referred to as an antenna circuit, comprises a capacitor 31, a coil 33 comprising a plurality of windings, and tapping means 35 for connection to the windings (point of connection shown in Figure 3 as tapping point 301). The capacitor 31 and coil 33 are arranged in series, and receive current from a battery 37 via switching devices 39 (it should be noted that in this representation coil 19 shown in Figure 2 is the coil 33 shown forming part of the antenna circuit 17). The switching devices 39 transform direct current (dc) into alternating current (ac) at a frequency that is determined by the operating frequency of the DDS. Referring to Figure 4, the battery 37 can be a 3 Volt battery configured in parallel with a power rail decoupling capacitor 38, which decouples the battery 37 from the antenna circuit 17.

Conventional antenna circuits comprise a coil and a capacitor, have a very narrow band response centered around a resonant frequency $(f_0)$ $(f_0$ being dependent on the reactance of the capacitor $(X_C)$ and reactance of the inductor $(X_L)$), and only work within the extents of this narrow frequency band; such circuits are said to be tuned and frequency selective. One way of describing the extents of the frequencies over which the circuit responds is via a bandwidth $(\delta f)$, which defines the range of frequencies within which the power output by the transmitter has halved, relative to the power output at the resonant frequency (known as the -3dB bandwidth).

This property is exploited in filters as well as in tuned circuits, where the goal is to remove all signals save those within the narrow band. As is well known in the art, the impedance of a series tuned circuit is given by equation (1).

$$Z = R + j(X_L - X_C) \qquad (1)$$

For series circuits operating at the resonant frequency $f_0$, then $X_L = X_C$ and the impedance $(Z)$ becomes purely resistive $(R)$. This resistance is in fact what limits the magnitude of the response at resonance; if the resistance were zero then the current flowing through the coil, and thus the response, would be infinite. The -3dB bandwidth of the response is also related to resistance - for antenna circuits having higher resistance, the magnitude of the response at resonance is reduced, but the bandwidth is increased, which means that the operating band of the antenna circuit is increased.

A parameter known as Q, defined as:

$$Q = \frac{X_L}{R} \qquad (2)$$

is used to describe the dependence of bandwidth and selectivity on loss associated with the antenna circuit (associated with reactance and resistance of the coil), and the -3dB bandwidth relative to the peak (at resonance), $\delta f$, of the antenna circuit is given by:

$$\delta f = \frac{f_0}{Q} \qquad (3)$$

From equation 3 it can be seen that the higher the Q factor (i.e. the lower the loss), the more selective and the narrower the bandwidth of the antenna circuit, whilst the lower the Q factor (i.e. the higher the loss) the less selective and the wider the bandwidth of the antenna circuit. It will thus be appreciated that one way of increasing the bandwidth and reducing the selectivity of the antenna circuit is by increasing the resistance of the antenna circuit. However, whilst increasing the resistance of the antenna circuit by placing a resistive load in the circuit increases the bandwidth, it does so at a cost, since resistive loads consume energy for battery powered transmitters. In practical applications, such a loss is unacceptable.

In this first arrangement the resistance of the coil is instead increased by the inclusion of the tapping means 35, which is connected to one of the windings of the coil and provides a return path 41 back to the power supply. Preferably a diode 43, or some other type of current direction controlling device (e.g. a transistor appropriately configured), is located in the return path 41. Thus in this arrangement, energy removed from the coil 33 is returned to the power rail capacitor 38 rather than (as is the case with use of a resistive load) being dissipated as heat.

When a coil 33 is tapped, as shown in Figures 3 and 4, it effectively becomes a voltage divider comprising 2 coils, L1 and L2, each of which has a number of turns $N_1$, $N_2$. The power rail capacitor 38 is charged with a voltage of $V_s$, and, since the return path 41 is connected thereto, the peak-to-peak voltage in the return path 41 (marked as $V_A$) for an input voltage $V_s$, is $2V_s$ (This assumes the barrier voltage of the rectifying device is small enough to be neglected compared to $V_s$). Therefore, by applying basic autotransformer theory $(V_a/V_A = (N_1+N_2)/N_1 = n)$ the peak-to-peak voltage in the tuned circuit (marked as $V_B$) is:

$$V_B = 2V_s n \tag{4}$$

This means that the multiplication of voltage in the tuned circuit (i.e. between the capacitor 31 and the coil 33) is:

$$V_B/V_{\text{power supply}} = 2V_s n/V_s = 2n \tag{5}$$

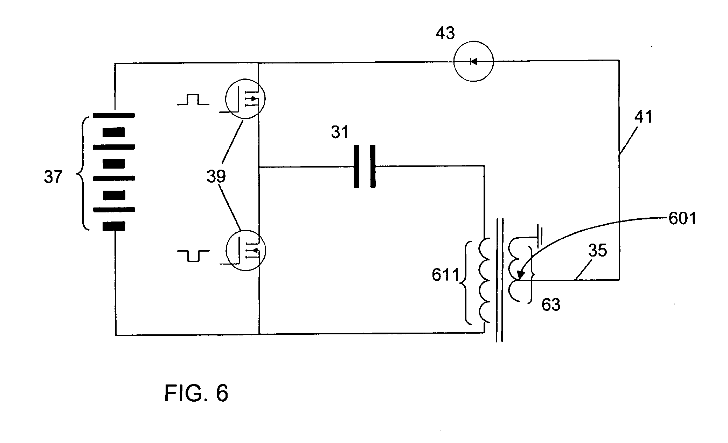

The Q factor of this arrangement can be identified by evaluating a conventional lossy antenna circuit that includes a resistive load; such an arrangement is shown in Figure 5, with the load resistor (R) being indicated as part 501. At resonance, the sinusoidal current, I, flowing through all components $I = V_s/R$ (peak-to-peak). Applying Ohms Law to individual reactance values leads to $V_B = I.X_L = 2.\pi.f_o.L.V_s/R$, where $f_o$ is the frequency of the sinusoidal current. Since $Q = 2.\pi.f_o.L/R$,

$$V_B = V_s.Q \tag{6}$$

Since the circuits shown in Figures 3 and 5 are equivalent (in that, in both cases, the resistance of the antenna circuit has been increased either indirectly or directly), the expressions of $V_B$ are equivalent. Equating equation (4) with equation (6):

$$Q = 2n$$

Thus the equivalent Q factor of the circuit shown in Figure 3 is double the turns ratio (n) between L1 and L2. Inserting this value of Q into equation (3), the bandwidth is now given by:

$$\delta f = \frac{1}{4\pi.n.\sqrt{LC}} \tag{7}$$

Turning back to Figure 4, it will be appreciated from the foregoing that an increase in bandwidth is accompanied by a corresponding decrease in circulating current $I_c$ in the antenna circuit 17, and thus a decrease in magnetic field generated by the coil 33. As a result the signal strength transmitted by the transmitter can be expected to be lower than is the case for tuned circuits having a high Q factor. One way of increasing the signal strength is to increase the amount of drive current $I_d$ fed into the antenna circuit 17, since this will, in turn, increase the magnitude of the circulating current $I_c$. The drive current $I_d$ output by the switching devices 39 is dependent, at least in part, on the Q factor of the antenna circuit, which means that a decrease in Q factor causes the switching devices 39 to draw more current from the power supply (here battery 37 in conjunction with power rail decoupling capacitor 38). This increase in drive current $I_d$ raises the magnitude of the circulating current $I_c$ such that a sufficiently high magnetic field, and signal strength, is generated by the coil 33.

It will be appreciated that the feature of returning energy from the coil 33 to the power rail decoupling capacitor 38 is particularly beneficial since, in the absence thereof, the battery would be drained in a shorter period of time than would be the case for a tuned circuit having a high Q factor and narrow bandwidth.

An alternative arrangement of the antenna circuit 17 is shown in Figure 6 and comprises a transformer having a first coil 611 and a second coil 63, wherein the second coil is connected to the tapping means 35 and is tapped at tapping point 601. A yet further possible arrangement could include an arrangement of two fixed capacitors in series in place of the single capacitor 31.

The foregoing arrangements are concerned with antenna circuits wherein the components are arranged in series, and the skilled person will appreciate that parallel tuned circuits can similarly be modified so as to transmit a plurality of different frequency signals. Since the reactance of the coil and the capacitor making up the antenna circuit 17 are combined to create very low impedance in series circuits, and in parallel circuits they are combined to create very high impedance, the selection of circuit type (parallel or series) will depend on operating requirements.

It will also be appreciated that, although the tapped coil arrangements have been presented in the context of proximity detecting apparatus, the antenna circuits presented in Figures 3, 4 and 6 are novel in their own right, and are not limited to low frequency operation.

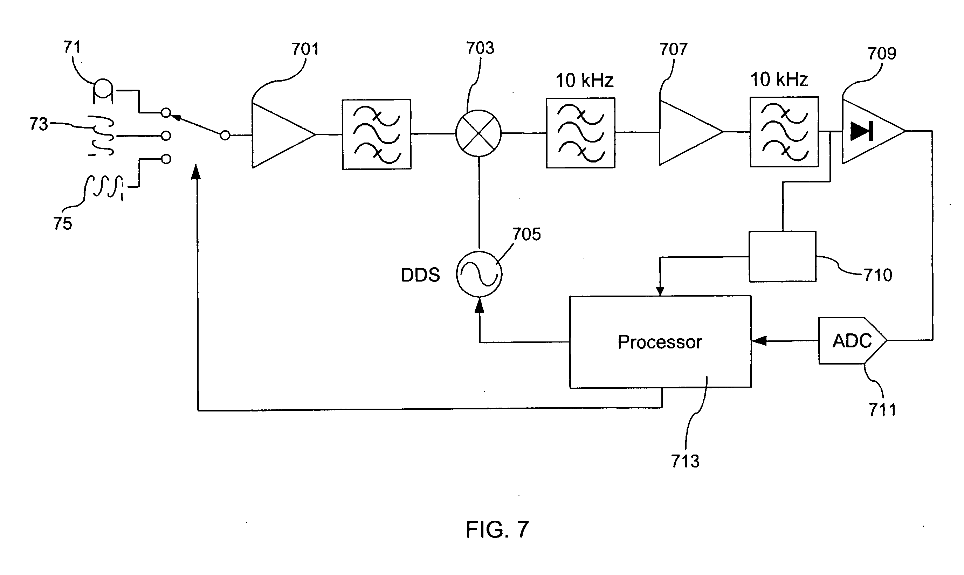

Turning now to Figure 7, aspects of the RF receiver 13 will be described. As described above, the function of the receiver 13 is to identify and extract, from the medley of signals in the vicinity of the receiver 13, those signals transmitted by the RF transmitter 11, and to measure the amplitude of the extracted signals in order to identify the distance between the receiver 13 and the transmitter 11.

In this preferred embodiment the receiver 13 includes three coils 71, 73, 75, each mounted orthogonally with respect to one another so as to receive signals along each of the principal axes of a magnetic field; preferably each of the coils 71, 73, 75 is ferrite loaded, so as to reduce their physical size. The receiver 13 comprises receiver circuitry that is based on the well known superheterodyne architecture and includes: an RF amplifier 701, which has a tuned circuit adapted to select RF signals falling within a specified range and an amplifier adapted to amplify the selected signals; a frequency mixer 703 for mixing the amplified signals with signals generated by a local oscillator 705 so as to output signals of an intermediate frequency (IF); an IF amplifier 707 for amplifying and filtering the IF signals; a rectifier 709; a demodulator 710 for extracting a modulation pattern from a amplified and filtered signal (optional); an A-to-D converter 711; and a processing system 713. Components 701, 703, 707, 709, 710, 711 make up the receiver circuitry. The IF is preferably 10 kHz, which means that the frequency of the local oscillator 703 is set at a 10 kHz offset from the frequency of wanted data signals received by the RF amplifier 801.

In addition to processing signals that have passed through the receiver circuitry, the processing system 713 can be arranged to modify the frequency of operation of the local oscillator 705 and to select between the three coils 71, 73, 75. The function of parts 701, 703, 707, 709 and 710 is conventional and will not be described in any further detail. However, the functionality of the processing system 713, in relation firstly to processing signals received by a plurality of antenna coils at low frequency and secondly in relation to the frequency hopping aspects of the invention, and will be now be described in more detail. (For further details of the superheterodyne receiver architecture the reader should refer to Chapter 5 of "Basic Radio: principles and technology" by Ian Poole, ISBN 0750626321).

For the purposes of describing how the processing system 713 processes signals received from the coils 71, 73, 75, it will be assumed that signals are transmitted at a predetermined frequency (determined, for example, with regard to the environment in which the proximity detecting system is operating). For the purposes of describing how the processing system 713 processes signals transmitted in accordance with a frequency hopping pattern, it will be assumed that signals are transmitted at a plurality of different frequencies (so that, for example, the transmitter 11 could be a device of the form described above with reference to Figures 2 - 6).

Turning firstly to operation of the processing system 713 when processing signals received by antenna coils 71, 73, 75, the processing system 713 can be programmed to control the frequency of operation of the local oscillator 705, thereby locking into the frequency at which signals are being transmitted (the receiver 13 having previously been notified of this frequency). Accordingly, at step 801 the processing system 713 sets the frequency of the local oscillator 705 and then connects (steps 803a, 803b, 803c), in turn, to the first, second, third coils 71, 73, 75. For each coil, the processing system 713 stores signals that are received and processed by the receiver circuitry. Having received signals from each coil, the processing system 713 can switch off the coils in order to measure (step 803d) a reference signal (the reference signal being used to compensate for temperature-dependent gain variations of the receiver circuitry).

At step 805 the stored signals are processed in order to identify their respective amplitudes (amplitude is derived, in a known manner, from the voltage levels associated with the received signals), and the amplitudes from each coil are then adjusted for gain variations (step 807, for example by means of the reference signal evaluated at step 803d). The resultant signals a, b and c (each corresponding to a respective coil) are then processed (step 809) to determine the magnitude A of the resultant vector, which represents the strength of the magnetic field at the receiver 13. A suitable algorithm for calculating A is given by:

$$A = (a^2 + b^2 + c^2)^{\frac{1}{2}} \qquad\qquad (8)$$

Whilst evaluating the vector according to equation (8) provides an extremely accurate measure of the magnitude of the signal strength, the evaluation is dependent on processing system 713 being configured with a certain minimum amount of processing capability; for applications where a slightly less accurate indication of range will suffice, an alternative and somewhat simpler algorithm can be used, in which the strength of the magnetic field is taken to be the largest of the readings from the three antennas:

$$A = \max\{a,b,c\} \qquad\qquad (9)$$

This algorithm is preferable for use in low budget proximity detecting apparatus. The range R can be calculated from the magnitude A by a look-up of a closest match in a mapping table and/or by using an appropriate mapping function. The values in the mapping table and/or the form of the mapping function can be obtained by a calibration process during a design stage.

Thus far the location of the receiver has been obtained in terms of a range from the transmitter but with no information on direction from the transmitter. To obtain full positional location, triangulation can be employed, in which signals from a plurality of transmitters at known locations are received by the receiver and compared against a mapping table within the receiver. The output of the mapping table can be evaluated to produce an estimate of the position of the receiver relative to the known positions of the transmitters, from which a bearing in addition to range can be identified.

The output signals from each transmitter are initially calibrated, so that signal strength at, e.g. 1 m, is known. A suitable calibration process, from which a mapping table can be derived, might include: selecting the transmission from a first transmitter; measuring a, b, & c; and calculating A (the received signal strength from the first transmitter). In view of the fact that signal strength varies as the inverse cube with distance and knowing a reference signal strength from the transmitter at, say, 1m, the distance from the first transmitter can then be calculated. This process is then repeated for each other transmitter, and once respective values of A have been calculated, the point at which the distances intersect is calculated. It is assumed that the location of each transmitter is known, so that intersection points can be identified e.g. by drawing circles, each being centered on one of the transmitters and having a radius equal to the distance calculated from the received signal strength. Each position calculated in this manner is stored for the respective values of signal strength and distance. Preferably the look up table is configured for a particular application; for example, when configured in a library for the purposes of enabling potential readers, each equipped with a receiver, to locate a book, the look up table could decide that if the receiver is 3m from transmitter 1 and 5m from transmitter 2, then the reader is in the fiction section of authors beginning with G.

In an alternative arrangement, the signal from a single transmitter can be received by a plurality of interconnected receivers that are positioned at known locations. The output of each receiver would then be evaluated to produce an estimate of the position of the transmitter relative to the known positions of the receivers.

It should be noted that, if the transmitted signal has a polarization which is in concordance with the polarization of an antenna coil, the range could be identified using one coil only. Since this will not, however, always be the case, it is preferable to use at least two, and more preferably three, coils to identify the range. Moreover it will be appreciated that in some positions the field will only need to be sensed in one or two directions, and that, in such cases, three coils are not required. However, the use of three coils advantageously allows for all orientations of the transmitter and receiver.

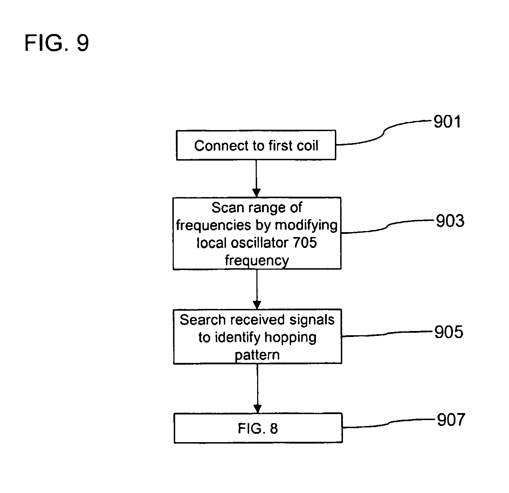

Turning now to the aspect of processing signals transmitted on a plurality of different frequencies, conveniently the local oscillator 705 is derived from a DDS module, which is operable to receive instructions from the processing system 713 and modify its operating frequency in accordance therewith. Since frequency selection on the part of the DDS is dependent on the frequency hopping pattern utilized by the transmitter 11, the processing system 713 firstly has to identify the pattern and then program the DDS accordingly. The processing system 713 is accordingly configured, either in software or hardware, with means for identifying this pattern, and the functionality associated therewith will now be described with reference to Figure 9, which is a flow diagram showing steps involved in this identification.

At step 901, the processing system 713 connects to the first coil 71 so that the receiver circuitry is only processing signals received by the first coil 71. At step 903, the processing system 713 modifies the frequency of operation of the local oscillator 705, and thus the frequency of reception of the receiver, to scan across a range of frequencies. The signals received at each of the scanned frequencies are amplified and filtered by the receiver circuitry and processed by the processor 713. The scanning step is repeated several times over a predetermined time period and patterns in the received signals are identified (step 905) by means of, e.g. evaluating the correlation between successively received signals. This can be repeated for the other two coils 73, 75, until a valid hopping pattern has been identified. If the orientation of the receiver is such that the first coil 71 is in a null, then it will not receive the transmission and thus be unable to identify the hopping pattern. Under such circumstances it will be necessary to test the second 73 (and possibly third 75) coil to try and identify a pattern. Clearly, if the hopping pattern is identified from the first coil 71, then there is no need to repeat the identification process using the second and third coils 73, 75, and the processing system 713 can progress to measure the signal level, as described below.

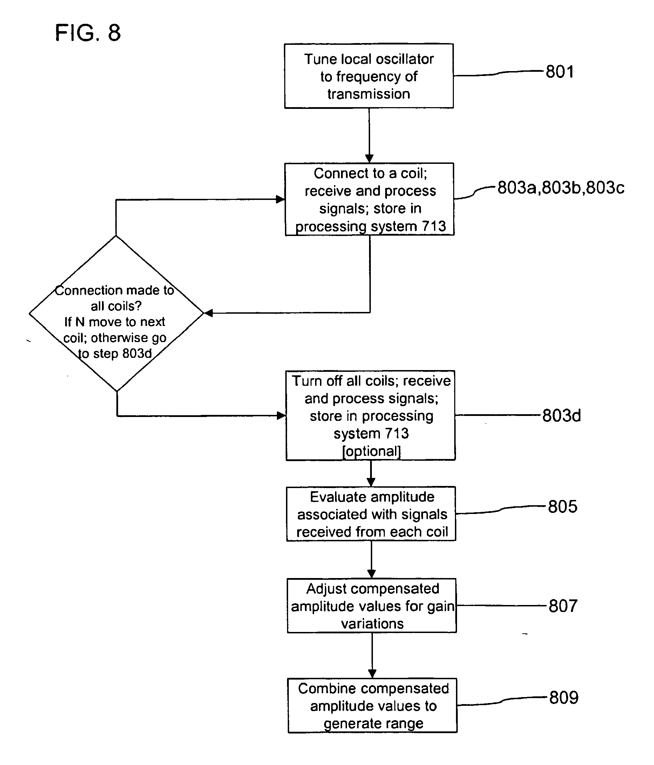

Once the frequency hopping pattern has been identified, the processing system 713 can program the frequency of operation of the local oscillator 705 (and hence the frequency of reception) to lock into the hopping pattern. Accordingly, at step 907, the processing system 713 sets the frequency of the local oscillator 705 to one of the frequencies in the hopping pattern and then connects (steps 809a, 809b, 809c), in turn, to the first, second, third coils 71, 73, 75, as described above in relation to Figure 8. Accordingly for each coil, the processing system 713 stores signals that are received and processed by the receiver circuitry. Having received signals from each coil, the processing system 713 switches off the coils and measures (step 803d) a reference signal (the reference signal being used to compensate for temperature-dependent gain variations of the receiver circuitry). All four measurement steps (803a - 803d) have to be performed before the transmitting frequency changes (the time period associated with the frequency hopping pattern having been established by the processing system 713 at step 905), and steps 805 onwards then progress as described above.

Whilst in the foregoing embodiments the receiver architecture is described as being that of a superheterodyne receiver, it could alternatively be zero-IF, low-IF or regenerative; in particular, if the receiver were implemented as an integrated circuit, the implementation would most likely use zero-IF or low-IF.

Whilst in the foregoing embodiments the processing system 713 and receiver circuitry 701, 703, 705, 707, 709, 710, 711 are arranged to process signals received from all 3 coils, the receiver 13 could alternatively comprise 3 separate sets of receiver circuitry (one for each coil). This would allow signals received by each of the coils to be processed in parallel rather than sequentially and would have advantages in terms of reduced measurement time at the expense of increased complexity.

The processing system 713 can additionally comprise means for comparing the identified signal strength against one or more predetermined thresholds which might, for example, correspond to a particular distance between the receiver and transmitter (or boundary, which, when the transmitter coil 33 comprises a circular loop, will be near spherical, and when the transmitter coil 33 comprises a rectangular loop having a high length to width ratio, the magnitude of the magnetic field becomes cylindrical along an axis extending in a direction parallel to the length of the antenna, with hemispheres at either end of the cylinder). This then provides a means of identifying whether the receiver is inside or outside of the boundary. In some arrangements the receiver could also include, or be in operative association with, an alarm system. This feature would be particularly useful for applications where it is important that the receiver remains within the boundary -e.g. location of briefcase relative to owner - since the alarm could be triggered as soon as the amplitude drops below the threshold. In applications where it is important that the receiver remains outside the boundary - e.g. in a hazardous area of a construction site - the alarm could be triggered when the received magnitude rises above the reference level. The skilled person will appreciate that many such thresholds could be set.

Whilst the above embodiment is presented in the context of tracking the location of a child, by a guardian, many other short range applications of the proximity detecting apparatus are possible. For example, proximity detecting apparatus according to the invention could be used in hazardous areas such as construction sites, sites attended by the emergency services (e.g. a building on fire) and on boats, where visibility of personnel is poor; in hospitals and health care facilities; in gaming scenarios; and for locating objects (e.g. objects mislaid around the house or office). Other applications are envisaged.

It will be appreciated that operation of the RF receiver 13 is completely independent of the configuration of the RF transmitter 11, meaning that the means by which a frequency hopping pattern is established and signals corresponding to the frequencies are transmitted has no bearing on the operation of the receiver 13.

It will be understood that the present disclosure is for the purpose of illustration only and the invention extends to modifications, variations and improvements thereto, and that any elements of the different embodiments may be combined to form further embodiments of the invention.

**Claims**

1. A radio frequency receiver for use in a proximity detecting system, the radio frequency receiver comprising
   at least one antenna coil operable to receive radio frequency signals;
   tunable receiver circuitry arranged in operative association with the antenna coil and being arranged to modify the frequency at which radio signals are received by the radio frequency receiver;
   a signal processor arranged to amplify and filter signals received by the radio frequency receiver; and
   a processing system arranged to receive radio signals amplified and filtered by the signal processor so as to evaluate a signal strength associated with each said antenna coil, the processing system being arranged to evaluate a distance between a radio frequency transmitter and the radio frequency receiver on the basis of evaluated signal strengths associated with radio signals received by the at least one antenna coil;
   wherein the radio frequency receiver is operable to receive and process radio signals of frequencies between 100kHz and 10MHz.

2. A radio frequency receiver according to claim 1, including three antenna coils, wherein the tunable receiver circuitry is selectively arranged to cooperate with each said antenna coil.

3. A radio frequency receiver according to claim 2, wherein each antenna coil is positioned along an axis in a direction extending substantially perpendicular to that occupied by the other antenna coils.

4. A radio frequency receiver according to claim 2 or claim 3, wherein, in a first operating condition, the receiver circuitry is arranged to select each of the three antenna coils in accordance with a specified selection procedure.

5. A radio frequency receiver according to claim 4, wherein the selection procedure comprises selecting each of the antenna coils sequentially.

6. A radio frequency receiver according to any one of claim 2 to claim 4, wherein the processing system is arranged to evaluate a distance between a radio frequency transmitter and the radio frequency receiver on the basis of evaluated signal strengths associated with radio signals received by each antenna coil.

7. A radio frequency receiver according to any one of claim 4 to claim 6, wherein the receiver circuitry is arranged to operate in a second operating condition wherein none of the antenna coils is selected and the signal processor is arranged to amplify and filter radio signals in the second operating condition.

8. A radio frequency receiver according to claim 7 dependent on claim 4 or claim 5, wherein the processing system is arranged to use the filtered and amplified signals corresponding to the second operating condition to modify the signal strengths evaluated in the first operating condition.

9. A radio frequency receiver according to claim 8, wherein the signal processor is arranged to identify, within a time period, a sequence of frequencies in the amplified and filtered radio signals.

10. A radio frequency receiver according to claim 9, wherein the signal processor is adapted to identify correlation between filtered radio signals in order to identify a sequence of frequencies in the received signals.

11. A radio frequency receiver according to any one of claim 8 to claim 10, wherein the signal processor is arranged to identify a modulation pattern within the received radio signals and to compare the identified modulation pattern with a specified modulation pattern.

12. Proximity detecting apparatus comprising a low radio frequency receiver according to any one of claim 1 to claim 11 and a low radio frequency transmitter arranged to transmit radio signals of frequencies less than 10 MHz, wherein the radio frequency receiver is arranged to receive and process signals from said radio frequency transmitter so as to generate data indicative of a distance between said radio frequency transmitter and radio frequency receiver.

13. Proximity detecting apparatus according to claim 12, including a further said radio frequency transmitter, wherein said receiver antenna coils are arranged to receive first signals from the radio frequency transmitter and second signals from said further radio frequency transmitter.

14. Proximity detecting apparatus according to claim 13, wherein the processing system is arranged to access a function operable to output data indicative of a position in response to input indicative of signal strength received by the antenna coils, the processing system being arranged to input first and second signals to said function and to combine output indicative of first and second positions corresponding thereto so as to identify a position of the radio frequency receiver.

15. Proximity detecting apparatus comprising first and second low radio frequency receivers according to any one of claim 1 to claim 12, and a low radio frequency transmitter arranged to transmit radio signals of frequencies less than 10 MHz, wherein each of said first and second radio frequency receivers is arranged to receive and process signals transmitted from said radio frequency transmitter and wherein the proximity detecting apparatus comprises means arranged to combine signals processed by said first and second radio frequency receivers so as to generate data indicative of a position of said radio frequency transmitter relative to said first and second radio frequency receivers.

16. A low frequency radio receiver for use in a proximity detecting system, the radio frequency receiver comprising three antenna coils each being operable to receive radio frequency signals at frequencies less than 10 MHz; tunable receiver circuitry arranged in operative association with each coil and being arranged to modify the frequency at which signals are received by the radio frequency receiver; signal processing means arranged to amplify and filter signals received by the radio frequency receiver; and frequency sequence identifying means arranged to identify, within a time period, a sequence of frequencies in the amplified and filtered signals.

17. A low frequency radio receiver according to claim 16, wherein, in a first operating condition, the receiver circuitry is arranged to select each of the three antenna coils in accordance with a specified selection procedure.

18. A low frequency radio receiver according to claim 17, wherein the selection procedure comprises selecting each of the antenna coils sequentially.

19. A low frequency radio receiver according to any one of claim 16 to claim 18, wherein the frequency sequence identifying means is arranged to correlate the filtered signals associated with at least one antenna coil in order to identify said sequence of frequencies.

20. A low frequency radio receiver according to any one of claim 17 to claim 19, wherein, for each frequency in the sequence, the receiver circuitry is arranged to operate in a second operating condition wherein none of the antenna coils is selected and the signal processor is arranged to amplify and filter signals corresponding to the second operating condition.

21. A low frequency radio receiver according to claim 20, wherein the processing system is arranged to use the filtered and amplified signals corresponding to the second operating condition to modify the signal strengths corresponding to the first operating condition.

22. A low frequency radio receiver according to any one of claim 16 to claim 21, including a processing system arranged to process filtered signals corresponding to the three antenna coils in accordance with a predetermined location determining algorithm so as to identify the position of a source of said radio signals received by the radio frequency receiver.

23. A low frequency radio receiver according to any one of the preceding claims, wherein the processing system is integral with the radio frequency receiver.

**Patentansprüche**

1. Funkfrequenzempfänger zur Benutzung in einem Näherungsdetektionssystem, wobei der Funkfrequenzempfänger umfasst:

   wenigstens eine Antennenspule, die dazu betreibbar ist, Funkfrequenzsignale zu empfangen;
   einen einstellbaren Schaltkreis, der in operativer Verbindung mit der Antennenspule angeordnet ist und dazu eingerichtet ist, die Frequenz zu modifizieren, bei der Funksignale durch den Funkfrequenzempfänger empfangen werden;
   einen Signalprozessor, der dazu eingerichtet ist, Signale zu verstärken und zu filtern, die durch den Funkfrequenzempfänger empfangen wurden;
   ein Verarbeitungssystem, das dazu eingerichtet ist, Funksignale zu empfangen, die durch den Signalprozessor verstärkt und gefiltert wurden, um eine Signalstärke zu evaluieren, die jeder der wenigstens einen Antennenspule zugeordnet ist, wobei das Verarbeitungssystem dazu eingerichtet ist, eine Entfernung zwischen einem Funkfrequenzübertrager und dem Funkfrequenzempfänger auf der Basis evaluierter Signalstärke zu evaluieren, die den Funksignalen zugeordnet ist, die durch wenigstens eine Antennenspule empfangen wurden;

   wobei der Funkfrequenzempfänger dazu betreibbar ist, Funksignale der Frequenzen zwischen 100 kHz 10 MHz zu empfangen und zu verarbeiten.

2. Funkfrequenzempfänger nach Anspruch 1, umfassend drei Antennenspulen, wobei der einstellbare Empfängerschaltkreis wahlweise dazu eingerichtet ist, um mit jeder der Antennenspulen zusammenzuwirken.

3. Funkfrequenzempfänger nach Anspruch 2, wobei jede Antennenspule entlang einer Achse in einer Richtung positioniert ist, die sich im Wesentlichen quer zu denen erstreckt, die durch die anderen Antennenspulen belegt sind.

4. Funkfrequenzempfänger nach Anspruch 2 oder 3, wobei in einem ersten Betriebszustand der Empfangsschaltkreis dazu eingerichtet ist, jede der drei Antennenspulen entsprechend einer vorbestimmten Auswahlprozedur auszuwählen.

**5.** Funkfrequenzempfänger nach Anspruch 4, wobei die Auswahlprozedur das Auswählen jeder der Antennenspulen der Reihe nach umfasst.

**6.** Funkfrequenzempfänger nach einem der Ansprüche 2-4, wobei das Verarbeitungssystem dazu eingerichtet ist, einen Abstand zwischen einem Funkfrequenzübertrager und dem Funkfrequenzempfänger auf der Basis einer evaluierten Signalstärke zu evaluieren, die den Funksignalen zugeordnet ist, die durch jede Antennenspule empfangen werden.

**7.** Funkfrequenzempfänger nach einem der Ansprüche 4-6, wobei der Empfängerschaltkreis dazu eingerichtet ist, in einem zweiten Betriebszustand zu arbeiten, in dem keine der Antennenspulen ausgewählt ist und wobei der Signalprozessor dazu eingerichtet ist, Funksignale in dem zweiten Betriebszustand zu verstärken und zu filtern.

**8.** Funkfrequenzempfänger nach Anspruch 7, abhängig von Anspruch 4 oder 5, wobei das Verarbeitungssystem dazu eingerichtet ist, die gefilterten und verstärkten Signale entsprechend dem zweiten Betriebszustand zu verwenden, um die Signalstärken zu modifizieren, die in dem ersten Betriebszustand evaluiert wurden.

**9.** Funkfrequenzempfänger nach Anspruch 8, wobei der Signalprozessor dazu eingerichtet ist, in einem Zeitabschnitt eine Sequenz von Frequenzen in den verstärkten und gefilterten Funksignalen zu identifizieren.

**10.** Funkfrequenzempfänger nach Anspruch 9, wobei der Signalprozessor dazu angepasst ist, Korrelationen zwischen gefilterten Radiosignalen zu identifizieren, um eine Sequenz von Frequenzen in den empfangenen Signalen zu identifizieren.

**11.** Funkfrequenzempfänger nach einem der Ansprüche 8-10, wobei der Signalprozessor dazu eingerichtet ist, ein Modulationsmuster in den empfangenen Funksignalen zu identifizieren und das identifizierte Modulationsmuster mit einem spezifizierten Modulationsmuster zu vergleichen.

**12.** Näherungsdetektionsgerät umfassend einen Empfänger für niedrige Funkfrequenzen nach einem der Ansprüche 1-11 und einen Funkfrequenzübertrager für niedrige Frequenzen, der dazu eingerichtet ist, Funksignale von Frequenzen niedriger als 10 MHz zu übertragen, wobei der Funkfrequenzempfänger dazu eingerichtet ist, Signale von dem Funkfrequenzübertrager zu empfangen und zu verarbeiten, um Daten zu generieren, die für einen Abstand zwischen dem Funkfrequenzübertrager und dem Funkfrequenzempfänger stehen.

**13.** Näherungsdetektionsgerät nach Anspruch 12, beinhaltend einen weiteren solchen Funkfrequenzübertrager, wobei die Empfängerantennenspulen dazu eingerichtet sind, erste Signale von dem Funkfrequenzübertrager und zweite Signale von dem weiteren Funkfrequenzübertrager zu empfangen.

**14.** Näherungsdetektionsgerät nach Anspruch 13, wobei das Verarbeitungssystem dazu eingerichtet ist, auf eine Funktion zuzugreifen, die dazu betreibbar ist, Daten, die für eine Position stehen, als Antwort auf eine Eingabe auszugeben, die für eine von den Antennenspulen empfangene Signalstärke steht, wobei das Verarbeitungssystem dazu eingerichtet ist, erste und zweite Signale in die Funktion einzugeben und Ausgaben zu kombinieren, die für zugehörige erste und zweite Positionen stehen, um eine Position des Funkfrequenzempfängers zu identifizieren.

**15.** Näherungsdetektionsgerät umfassend erste und zweite Empfänger für niedrige Funkfrequenzen nach einem der Ansprüche 1-12, und einem Übertrager für niedrige Funkfrequenzen, der dazu eingerichtet ist Funksignale von Frequenzen niedriger als 10 MHz zu übertragen, wobei jeder der ersten und zweiten Funkfrequenzempfänger dazu eingerichtet ist, Signale zu empfangen und zu verarbeiten, die von dem Funkfrequenzübertrager übertragen wurden und wobei das Näherungsdetektionsgerät Mittel umfasst, die dazu eingerichtet sind, Signale zu kombinieren, die durch den ersten und zweiten Funkfrequenzempfänger verarbeitet wurden, um Daten zu generieren, die für eine Position des Funkfrequenzempfängers relativ zu dem ersten und zweiten Funkfrequenzempfänger stehen.

**16.** Empfänger für niedrige Funkfrequenzen zur Verwendung in einem Näherungsdetektionssystem, wobei der Funkfrequenzempfänger umfasst: drei Antennenspulen, von denen jede dazu betreibbar ist, Funkfrequenzsignale auf Frequenzen niedriger als 10 MHz zu empfangen; einen einstellbaren Empfängerschaltkreis, der in operativem Zusammenhang mit jeder Spule angeordnet ist und der dazu eingerichtet ist, die Frequenz zu modifizieren, bei der Signale durch den Funkfrequenzempfänger empfangen werden; Signalverarbeitungsmittel, dazu eingerichtet, Signale zu verstärken und zu filtern, die durch den Funkfrequenzempfänger empfangen wurden und Frequenzsequenzidentifizierungsmittel, dazu eingerichtet, innerhalb eines Zeitabschnitts eine Sequenz von Frequenzen in den verstärkten und gefilterten Signalen zu identifizieren.

17. Empfänger für niedrige Funkfrequenzen nach Anspruch 16, wobei der Empfängerschaltkreis in einem ersten Betriebszustand dazu eingerichtet ist, jede der drei Antennenspulen entsprechend einer spezifizierten Selektionsprozedur auszuwählen.

18. Empfänger für niedrige Funkfrequenzen nach Anspruch 17, wobei die Selektionsprozedur das Auswählen jeder der Antennenspulen der Reihe nach umfasst.

19. Empfänger für niedrige Funkfrequenzen nach einem der Ansprüche 16 bis 18, wobei das Frequenzsequenzidentifikationsmittel dazu eingerichtet ist, die gefilterten Signale, die wenigstens einer Antennenspule zugeordnet sind, zu korrelieren, um die Sequenz der Frequenzen zu identifizieren.

20. Empfänger für niedrige Funkfrequenzen nach einem der Ansprüche 17-19, wobei der Empfängerschaltkreis für jede Frequenz in der Sequenz dazu eingerichtet ist, in einem zweiten Betriebszustand zu arbeiten, wobei keine Antennenspule ausgewählt ist, und der Signalprozessor ist dazu eingerichtet, Signale zu verstärken und zu filtern, die zu dem zweiten Betriebszustand gehören.

21. Empfänger für niedrige Funkfrequenzen nach Anspruch 20, wobei das Verarbeitungssystem dazu eingerichtet ist, die gefilterten und verstärkten Signale, die zu dem zweiten Betriebszustand gehören, zu verwenden, um die Signalstärken, die zu dem Erstbetriebszustand gehören, zu modifizieren.

22. Empfänger für niedrige Funkfrequenzen nach einem der Ansprüche 16-21, beinhaltend ein Verarbeitungssystem, das dazu eingerichtet ist, gefilterte Signale, die zu den drei Antennenspulen gehören entsprechend einem vorbestimmten Algorithmus zur Ortsbestimmung zu verarbeiten, um die Position einer Quelle der Funksignale, die durch den Funkfrequenzempfänger empfangen wurden, zu identifizieren.

23. Empfänger für niedrige Funkfrequenzen nach einem der vorstehenden Ansprüche, wobei das Verarbeitungssystem in dem Funkfrequenzempfänger integriert ist.


**Revendications**

1. Récepteur radio fréquence destiné à être utilisé dans un système de détection de proximité, le récepteur radio fréquence comportant
   au moins une bobine d'antenne pouvant être utilisée pour recevoir des signaux radio fréquence ;
   un circuit de récepteur accordable agencé en association en fonctionnement avec la bobine d'antenne et étant agencé pour modifier la fréquence sur laquelle des signaux radio sont reçus par le récepteur radio fréquence ;
   un processeur de signal agencé pour amplifier et filtrer des signaux reçus par le récepteur radio fréquence ; et
   un système de traitement agencé pour recevoir des signaux radio amplifiés et filtrés par le processeur de signal de manière à évaluer une force de signal associée à chaque dite bobine d'antenne, le système de traitement étant agencé pour évaluer une distance entre un émetteur radio fréquence et le récepteur radio fréquence sur la base des forces de signal évaluées associées aux signaux radio reçus par la au moins une bobine d'antenne;
   où le récepteur radio fréquence peut être utilisé pour recevoir et traiter des signaux radio de fréquences situées entre 100 kHz et 10 MHz.

2. Récepteur radio fréquence selon la revendication 1, incluant trois bobines d'antenne, dans lequel le circuit de récepteur accordable est agencé sélectivement pour coopérer avec chacune desdites bobines d'antenne.

3. Récepteur radio fréquence selon la revendication 2, dans lequel chaque bobine d'antenne est positionnée le long d'un axe dans une direction se prolongeant substantiellement perpendiculairement à celle occupée par les autres bobines d'antenne.

4. Récepteur radio fréquence selon la revendication 2 ou la revendication 3, dans lequel, dans une première condition de fonctionnement, le circuit de récepteur est agencé pour sélectionner chacune des trois bobines d'antenne conformément à une procédure de sélection spécifiée.

5. Récepteur radio fréquence selon la revendication 4, dans lequel la procédure de sélection comporte une sélection séquentielle de chacune des bobines d'antenne.

6. Récepteur radio fréquence selon l'une quelconque des revendications 2 à 4, dans lequel le système de traitement est agencé pour évaluer une distance entre un émetteur radio fréquence et le récepteur radio fréquence sur la base des forces de signal évaluées associées aux signaux radio reçus par chaque bobine d'antenne.

7. Récepteur radio fréquence selon l'une quelconque des revendications 4 à 6, dans lequel le circuit de récepteur est agencé pour fonctionner dans une deuxième condition de fonctionnement dans laquelle aucune des bobines d'antenne n'est sélectionnée et le processeur de signal est agencé pour amplifier et filtrer des signaux radio dans la deuxième condition de fonctionnement.

8. Récepteur radio fréquence selon la revendication 7 dépendant de la revendication 4 ou 5, dans lequel le système de traitement est agencé pour utiliser les signaux filtrées et amplifiés correspondant à la deuxième condition de fonctionnement pour modifier les forces de signal évaluées dans la première condition de fonctionnement.

9. Récepteur radio fréquence selon la revendication 8, dans lequel le processeur de signal est agencé pour identifier, à l'intérieur d'une période de temps, une séquence de fréquences dans les signaux radio amplifiés et filtrés.

10. Récepteur radio fréquence selon la revendication 9, dans lequel le processeur de signal est conçu pour identifier une corrélation entre des signaux radio filtrés afin d'identifier une séquence de fréquences dans les signaux reçus.

11. Récepteur radio fréquence selon l'une quelconque des revendications 8 à 10, dans lequel le processeur de signal est agencé pour identifier un motif de modulation à l'intérieur des signaux radio reçus et pour comparer le motif de modulation identifié à un motif de modulation spécifié.

12. Dispositif de détection de proximité comportant un récepteur radio à basses fréquences selon l'une quelconque des revendications 1 à 11 ainsi qu'un émetteur radio à basses fréquences agencé pour émettre des signaux radio de fréquences inférieures à 10 MHz, dans lequel le récepteur radio fréquence est agencé pour recevoir et traiter des signaux en provenance dudit émetteur radio fréquence de sorte à produire des données indicatives d'une distance entre lesdits émetteur radio fréquence et récepteur radio fréquence.

13. Dispositif de détection de proximité selon la revendication 12, incluant un dit émetteur radio fréquence supplémentaire, dans lequel lesdites bobines d'antenne de récepteur sont agencées pour recevoir des premiers signaux en provenance de l'émetteur radio fréquence et des deuxièmes signaux en provenance dudit émetteur radio fréquence supplémentaire.

14. Dispositif de détection de proximité selon la revendication 13, dans lequel le système de traitement est agencé pour accéder à une fonction pouvant être mise en oeuvre pour fournir en sortie des données indicatives d'une position en réponse à une entrée indicative d'une force de signal reçue par les bobines d'antenne, le système de traitement étant agencé pour admettre en entrée un premier ainsi qu'un deuxième signal pour ladite fonction et pour combiner une sortie indicative d'une première et d'une deuxième position correspondant à ceux-ci de façon à identifier une position du récepteur radio fréquence.

15. Dispositif de détection de proximité comportant un premier ainsi qu'un deuxième récepteur radio à basses fréquences selon l'une quelconque des revendications 1 à 12, ainsi qu'un émetteur radio à basses fréquences agencé pour émettre des signaux radio de fréquences inférieures à 10 MHz, dans lequel chacun desdits premier et deuxième récepteur radio fréquence est agencé pour recevoir et traiter des signaux émis à partir dudit émetteur radio fréquence et où le dispositif de détection de proximité comporte un moyen agencé pour combiner des signaux traités par lesdits premier et deuxième récepteur radio fréquence de manière à produire des données indicatives d'une position dudit émetteur radio fréquence par rapport auxdits premier et deuxième récepteurs radio fréquence.

16. Récepteur radio fréquence destiné à être utilisé dans un système de détection de proximité, le récepteur radio fréquence comportant trois bobines d'antenne chacune pouvant être utilisée pour recevoir des signaux radio fréquence sur des fréquences inférieures à 10 MHz ; un circuit de récepteur accordable agencé en association en fonctionnement avec chaque bobine et étant agencé pour modifier la fréquence sur laquelle des signaux sont reçus par le récepteur radio fréquence ; un moyen de traitement de signal agencé pour amplifier et filtrer des signaux reçus par le récepteur radio fréquence ; et un moyen d'identification de séquence de fréquences agencé pour identifier, à l'intérieur d'une période de temps, une séquence de fréquences dans les signaux amplifiés et filtrés.

**17.** Récepteur radio à basses fréquences selon la revendication 16, dans lequel, dans une première condition de fonctionnement, le circuit de récepteur est agencé pour sélectionner chacune des trois bobines d'antenne conformément à une procédure de sélection spécifiée.

**18.** Récepteur radio à basses fréquences selon la revendication 17, dans lequel la procédure de sélection comporte une sélection séquentielle de chacune des bobines d'antenne.

**19.** Récepteur radio à basses fréquences selon l'une quelconque des revendications 16 à 18, dans lequel le moyen d'identification de séquence de fréquences est agencé pour corréler les signaux filtrés associés à au moins une bobine d'antenne afin d'identifier ladite séquence de fréquences.

**20.** Récepteur radio à basses fréquences selon l'une quelconque des revendications 17 à 19, dans lequel, pour chaque fréquence dans la séquence, le circuit de récepteur est agencé pour fonctionner dans une deuxième condition de fonctionnement dans laquelle aucune des bobines d'antenne n'est sélectionnée et le processeur de signal est agencé pour amplifier et filtrer des signaux correspondant à la deuxième condition de fonctionnement.

**21.** Récepteur radio à basses fréquences selon la revendication 20, dans lequel le système de traitement est agencé pour utiliser les signaux filtrés et amplifiés correspondant à la deuxième condition de fonctionnement pour modifier les forces de signal correspondant à la première condition de fonctionnement.

**22.** Récepteur radio à basses fréquences selon l'une quelconque des revendications 16 à 21, incluant un système de traitement agencé pour traiter des signaux filtrés correspondant aux trois bobines d'antenne conformément à un algorithme de détermination d'emplacement prédéterminé déterminant un algorithme de sorte à identifier la position d'une source desdits signaux radio reçus par le récepteur radio fréquence.

**23.** Récepteur radio à basses fréquences selon l'une quelconque des précédentes revendications, dans lequel le système de traitement est intégré au récepteur radio fréquence.

FIG. 1

EP 1 658 681 B1

11

17

Variable Frequency Generator

15

Driving Circuit

19

Field Generation Coil

FIG. 2

18

FIG. 3

EP 1 658 681 B1

FIG. 4

FIG. 5

EP 1 658 681 B1

FIG. 6

FIG. 7

EP 1 658 681 B1

# FIG. 8

Tune local oscillator to frequency of transmission — 801

Connect to a coil; receive and process signals; store in processing system 713 — 803a,803b,803c

Connection made to all coils? If N move to next coil; otherwise go to step 803d

Turn off all coils; receive and process signals; store in processing system 713 [optional] — 803d

Evaluate amplitude associated with signals received from each coil — 805

Adjust compensated amplitude values for gain variations — 807

Combine compensated amplitude values to generate range — 809

# FIG. 9

| | |
|---|---|
| Connect to first coil | 901 |
| Scan range of frequencies by modifying local oscillator 705 frequency | 903 |
| Search received signals to identify hopping pattern | 905 |
| FIG. 8 | 907 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 9000077 W
- WO 9008060 A
- US 5714932 A

- US 5218344 A
- US 2002140419 A

**Non-patent literature cited in the description**

- **IAN POOLE.** Basic Radio: principles and technology